(19) Europäisches Patentamt
European Patent Office
Office européen des brevets

(11) Veröffentlichungsnummer : **0 207 003**
**B1**

(12) # EUROPÄISCHE PATENTSCHRIFT

(45) Veröffentlichungstag der Patentschrift : **01.02.89**

(51) Int. Cl.⁴ : **C 08 F283/06**, D 06 P 1/613

(21) Anmeldenummer : **86810285.6**

(22) Anmeldetag : **23.06.86**

(54) **Wasserlösliche oder in Wasser dispergierbare Pfropfpolymerisate, deren Herstellung und Verwendung.**

(30) Priorität : **28.06.85 CH 2751/85**

(43) Veröffentlichungstag der Anmeldung : **30.12.86 Patentblatt 86/52**

(45) Bekanntmachung des Hinweises auf die Patenterteilung : **01.02.89 Patentblatt 89/05**

(84) Benannte Vertragsstaaten : **BE CH DE FR GB IT LI**

(56) Entgegenhaltungen :
**EP-A- 0 098 803**
**DE-A- 2 811 422**
**FR-A- 1 286 670**
**FR-A- 2 167 702**
**CHEMICAL ABSTRACTS, Band 86, Nr. 22, 30. Mai 1977, Seite 73, Zusammenfassung Nr. 156966f, Columbus, Ohio, US**

(73) Patentinhaber : **CIBA-GEIGY AG**
**Klybeckstrasse 141**
**CH-4002 Basel (CH)**

(72) Erfinder : **Abel, Heinz**
**Egertenstrasse 5**
**CH-4153 Reinach (CH)**
Erfinder : **Schäfer, Paul, Dr.**
**Rundweg 5**
**D-7801 Oberried (DE)**
Erfinder : **Berendt, Hans-Ulrich**
**Langgartenweg 25**
**CH-4123 Allschwil (CH)**

EP 0 207 003 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue wasserlösliche oder in Wasser dispergierbare Pfropfpolymerisate, die als Faltenfreimittel für Textilmaterialien Verwendung finden können.

Aus der EP-A-098 803 sind Pfropfpolymerisate mit aufgepfropfter ethylenisch ungesättigter Carbonsäure oder Sulfonsäure bekannt, die als Pfropfgrundlage eine Polyglykoletherkette mit einem hydrophoben Rest enthalten, deren zweite endständige Hydroxylgruppe acyliert z. B. acetyliert sein kann. Diese Pfropfpolymerisate kommen für die verschiedensten Anwendungszwecke in Betracht.

Die erfindungsgemässen Pfropfpolymerisate sind dadurch gekennzeichnet, dass sie als Pfropfgrundlage ein Polyalkylenglykol, dessen zwei endständige Hydroxylgruppen mit einer langkettigen Fettsäure von 8 bis 26 Kohlenstoffatomen, insbesondere 10 bis 22 Kohlenstoffatomen verestert sind, aufweisen und an einzelne Kohlenstoffatome der Polyalkylenglykoletherkette Seitenketten, die von aufgepfropften ethylenisch ungesättigten Monomeren entstammen, enthalten.

Die neuen Pfropfpolymerisate können je nach Aufbau des Polymeren (Pfropfsubstrats) und nach der Art der aufgepfropften Seitenketten oder Seitenzweige wasserlöslich sein oder in dispergierter Form in wässerigen Medien vorliegen.

Wasserlösliche Pfropfpolymerisate sind gekennzeichnet durch hydrophile Pfropfbestandteile, welche bevorzugt saure wasserlöslich machende Gruppen, wie z. B. Carboxyl- und/oder Sulfonsäuregruppen sowie auch Amidgruppen aufweisen.

Als Pfropfgrundlage geeignet sind die Diester von Polyalkylenglykolen aus 2 bis 200 Mol, vorzugsweise 4 bis 100 Mol Alkylenoxid, wie z. B. Ethylenoxid, Propylenoxid oder Gemischen von Ethylenoxid und Propylenoxid. Vorzugsweise verwendet man Diester dieser Polyalkylenglykole mit langkettigen Fettsäuren von 12 bis 22 Kohlenstoffatomen. Die unveresterten Polyalkylenglykole weisen zweckmässigerweise ein Molekulargewicht von 200 bis 4 400, vorteilhafterweise 300 bis 1 600 und vorzugsweise 300 bis 1 000 auf. Die Veresterung der Alkylenglykole erfolgt durch Umsetzen der Alkylenglykole mit 2 Mol Fettsäure. Man kann auch zuerst Alkylenoxid an die Fettsäure anlagern und dann das Fettsäure-Alkylenoxid-addukt mit derselben Fettsäure oder einer anderen Fettsäure verestern. Die Fettsäuren können gesättigt oder ungesättigt sein, wie z. B. die Capryl-, Caprin-, Laurin-, Myristin-, Palmitin-, Kokosfett-, Stearin-, Talgfett-, Arachin-, Behen-, Lignocerin- oder Cerotinsäure bzw. die Decen-, Dodecen-, Tetradecen-, Hexadecen-, Oel-, Eläostearin-, Linol-, Linolen-, Ricinolein- oder Arachidonsäure. Dabei sind feste Fettsäuren, wie z. B. Talgfettsäure, Palmitin-, Arachin-, Behen- und besonders Stearinsäure bevorzugt.

Als ethylenisch ungesättigte polymerisierbare Monomere, die zur Einführung der aufgepfropften Seitenketten in die als Stammkette genannten Polyalkylenoxidaddukte dienen, eignen sich sowohl hydrophile Gruppen aufweisende Monomere als auch stickstoffhaltige Vinylverbindungen.

Als hydrophile Gruppen aufweisende Monomere können Carbonsäuren, Dicarbonsäuren oder deren Anhydride sowie auch Sulfonsäuren, die jeweils einen ethylenisch ungesättigten aliphatischen Rest und vorzugsweise höchstens 7 Kohlenstoffatome aufweisen, in Betracht kommen.

Bei den Monocarbonsäuren handelt es sich z. B. um die Acrylsäure, Methacrylsäure, α-Halogenacrylsäure, 2-Hydroxyethylacrylsäure, α-Cyanoacrylsäure, Crotonsäure und Vinylessigsäure. Ethylenisch ungesättigte Dicarbonsäuren sind vorzugsweise die Fumarsäure, Maleinsäure oder Itaconsäure, ferner die Mesaconsäure, Citraconsäure, Glutaconsäure und Methylenmalonsäure. Als Anhydrid dieser Säuren sei insbesondere Maleinsäureanhydrid genannt.

Als definitionsgemässe Sulfonsäuren kommen beispielsweise Vinylsulfonsäure oder 2-Acrylamido-2-methylpropansulfonsäure in Frage. Vorzugsweise handelt es sich um Monocarbonsäuren mit 3 bis 5 Kohlenstoffatomen, insbesondere um die Methacrylsäure und vor allem um die Acrylsäure.

Beispiele für polymerisierbare stickstoffhaltige Vinylverbindungen sind gegebenenfalls N-substituierte Amide oder Imide sowie Nitrile ethylenisch ungesättigter aliphatischer Mono- oder Dicarbonsäuren, wie z. B. Acrylamid, Methacrylamid, Maleinimid, Vinylidencyanid, Acrylnitril oder Methacrylnitril, und N-Vinylderivate von stickstoffhaltigen 5- oder 6-gliedrigen Heterocyclen, wie z. B. N-Vinylpyrrolidon oder Vinylpyridin.

Die zur Einführung der Seitenketten (oder Seitenzweige) benötigten Monomeren können einzeln oder in Mischung untereinander verwendet werden. Bevorzugte aufgepfropfte Monomere sind Acrylsäure und Acrylamid.

Erfindungsgemässe Pfropfpolymerisate von besonderem Interesse enthalten als Stammkette Reste eines Alkylenoxidadduktes aus 3 bis 100 Mol, vorzugsweise 4 bis 40 Mol Ethylenoxid und als Seitenketten aufgepfropfte Acrylsäure oder Acrylamid, wobei das Polyalkylenglykol mit einer Fettsäure von 12 bis 22 Kohlenstoffatomen verestert ist.

Unter diesen Produkten werden solche, die als Stammkette den Rest eines aus 4 bis 40 Mol, bevorzugt 6 bis 20 Mol Ethylenoxid erhaltenen Adduktes, dessen zwei endständige Hydroxylgruppen mit Palmitinsäure, Behensäure und besonders mit Stearinsäure verestert sind, bevorzugt.

Als besonders geeignet haben sich vor allem Umsetzungsprodukte (Pfropfpolymerisate) aus Acrylsäure oder Acrylamid und mit Stearinsäure veresterte Polyethylenoxidaddukte aus 6 bis 15 Mol Ethylenoxid.

Die erfindungsgemässen Pfropfpolymerisate enthalten vorteilhafterweise 15 bis 80 Gew.-% des

definierten veresterten Alkylenoxidadduktes als Stammkette und 85 bis 20 Gew.-% aufgepfropftes ethylenisch ungesättigtes Monomer, insbesondere Acrylsäure oder Acrylamid als Seitenketten.

Besonders bevorzugt weisen die Pfropfpolymerisate 20 bis 75 Gew.-% des definierten veresterten Alkylenoxidadduktes insbesondere Polyethylenoxidadduktes als Stammkette und 80 bis 25 Gew.-% aufgepfropfte Acrylsäure oder Acrylamid als Seitenketten auf.

Die Herstellung der erfindungsgemässen Umsetzungsprodukte (Pfropfpolymerisate) erfolgt nach an sich bekannten Methoden, zweckmässig in der Weise, dass man (1) ein Polyalkylenglykol, welches eine Polyglykoletherkette von 2 bis 200

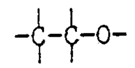

Gruppen aufweist und an beiden endständigen Hydroxylgruppen mit einer Fettsäure von 8 bis 26 Kohlenstoffatomen verestert ist, mit (2) einem ethylenisch ungesättigten polymerisierbaren Monomer, welches vorzugsweise hydrophile Gruppen enthält, wie z. B. entsprechenden Carbonsäuren, deren Anhydriden oder Sulfonsäuren oder Amiden zusammenbringt und in Gegenwart von Katalysatoren, zweckmässig bei einer Temperatur von 40 bis 100 °C polymerisiert. Man erhält somit Umsetzungsprodukte, vorwiegend Pfropfpolymerisate, in denen das Alkylenoxidaddukt die Stammkette bildet, die an einzelnen Kohlenstoffatomen das aufgepfropfte ethylenisch ungesättigte Monomer, insbesondere Acrylsäure oder Acrylamid in Form von Seitenketten enthält.

Als Katalysatoren werden zweckmässigerweise freie Radikale bildende organische oder vorzugsweise anorganische Initiatoren verwendet. Geeignete organische Initiatoren zur Durchführung der radikalischen Polymerisation sind z. B. symmetrische Peroxiddicarbonate, Butylperoctoate, Butylperbenzoate, Peracetate oder Peroxiddicarbamate. Geeignete anorganische Initiatoren sind Wasserstoffsuperoxid, Perborate, Persulfate oder Peroxidsulfate.

Bevorzugter Initiator oder Aktivator ist Kaliumpersulfat.

Diese Katalysatoren können in Mengen von 0,05 bis 5 Gew.-% vorteilhafterweise 0,05 bis 2 Gew.-% und vorzugsweise 0,1 bis 1 Gew.-%, bezogen auf die Ausgangsprodukte eingesetzt werden.

Die Pfropfpolymerisation wird vorteilhafterweise in inerter Atmosphäre, z. B. in einer Stickstoffatmosphäre durchgeführt.

Die Polymerisate fallen als Lösungen oder als viskose Massen an. Durch Verdünnen bzw. je nach der Art der aufgepfropften Monomere durch Lösen und Verdünnen mit Wasser kann man für die Praxis verwendbare Produkte mit einem Trockengehalt von z. B. 2 bis 35 Gew.-%, vorzugsweise 5 bis 25 Gew.-% herstellen. Zur Konservierung und/oder Verbesserung der Lagerstabilität der erhaltenen wässerigen Pfropfpolymerisatlösungen können Konservierungsmittel, wie z. B. Chloracetamid, N-Hydroxymethylchloracetamid, Pentachlorphenolate, Alkalimetallnitrite, Triethanolamin oder vorzugsweise Hydrochinonmonomethylether oder auch antibakterielle Mittel, wie z. B. Natriumazid oder oberflächenaktive quaternäre Ammoniumverbindungen, die einen oder zwei Fettalkylreste aufweisen, zugesetzt werden. Vorteilhafterweise können auch Mischungen dieser Konservierungsmittel und keimtötenden Verbindungen eingesetzt werden.

Die bevorzugten 5 bis 25 %igen Lösungen der erhaltenen Pfropfpolymerisate besitzen bei 25 °C eine Viskosität von 500 bis 40'000, vorzugsweise 3'000 bis 25'000 mPas (milli Pascal Sekunde).

Die neuen Polymerisate zeigen interessante abstossende Effekte und sie können in den verschiedensten Arten der Textilapplikation, wie z. B. Vorbehandlung, Färben oder Ausrüstung Verwendung finden. Sie werden insbesondere als Faltenfreimittel beim Färben von Cellulosefasern, Polyesterfasern, synthetischen Polyamidfasern oder Mischungen dieser Fasertypen, sowie auch von Wolle oder Polyacrylnitrilfasern verwendet, da sie Adhäsionskräften des Textilmaterials entgegenwirken, wodurch eine Faltenbildung verhindert wird. Sie erhöhen die Diffusionsgeschwindigkeit der Farbstoffe in den Fasern und steigern somit die Farbausbeute. Sie können jedoch auch in Wasch- oder Vorbehandlungsflotten, z. B. Bleichflotten eingesetzt werden. Zudem haben sie eine schaumdämpfende Wirkung.

Gegenstand der vorliegenden Erfindung ist demnach auch ein Verfahren zum Färben bzw. optischen Aufhellen von Cellulose-, natürliche oder synthetische Polyamidfasern, Polyacrylnitrilfasern und besonders Polyesterfasern enthaltenden Textilmaterialien mit den entsprechend geeigneten Farbstoffen bzw. optischen Aufhellern, welches dadurch gekennzeichnet ist, dass man die Textilmaterialien in Gegenwart des erfindungsgemässen Pfropfpolymerisates färbt bzw. optisch aufhellt. Die Einsatzmengen, in denen die Pfropfpolymerisate den Färbebädern oder Aufhellflotten zugesetzt werden, bewegen sich zwischen 1 und 10, vorzugsweise 2 und 5 Gew.-% bezogen auf das Gewicht des Textilmaterials.

Als Cellulosefasermaterial kommt solches aus regenerierter oder insbesondere natürlicher Cellulose in Betracht, wie z. B. Zellwolle, Viskoseseide, Hanf, Leinen, Jute oder vorzugsweise Baumwolle.

Cellulosefasermaterialien werden in der Regel mit substantiven Farbstoffen, Küpenfarbstoffen, Leukoküpenfarbstoffestern oder vor allem Reaktivfarbstoffen gefärbt.

Als Substantivfarbstoffe sind die üblichen Direktfarbstoffe geeignet, beispielsweise die in Colour Index 3rd Edition, (1971) Vol. 2 auf den Seiten 2005-2478 genannten « Direct Dyes ».

Bei den Küpenfarbstoffen handelt es sich um höher annellierte und heterocyclische Benzochinone

oder Naphthochinone, um Schwefelfarbstoffe und insbesondere um Anthrachinoide oder Indigoide Farbstoffe. Beispiele von erfindungsgemäss verwendbaren Küpenfarbstoffen sind im Colour Index 3rd Edition (1971) Vol. 3 auf den Seiten 3649 bis 3837 unter der Bezeichnung « Sulphur Dyes » and « Vat Dyes » aufgeführt.

Die Leukoküpenfarbstoffester sind z. B. aus Küpenfarbstoffen der Indigo-, Anthrachinon- oder Indanthren-Reihe durch Reduktion z. B. mit Eisenpulver und anschliessende Veresterung z. B. mit Chlorsulfonsäure erhältlich und sind im Colour Index 3rd Edition, 1971, Vol. 3 als « Solubilised Vat Dyes » bezeichnet.

Unter Reaktivfarbstoffen werden die üblichen Farbstoffe verstanden, welche mit der Cellulose eine chemische Bindung eingehen, z. B. die im Colour Index, im Band 3 (3. Auflage, 1971) auf den Seiten 3391-3560 und in Band 6 (revidierte 3. Auflage, 1975) auf den Seiten 6268-6345 aufgeführten « Reactive Dyes ».

Als synthetische Polyamidfasermaterialien, insbesondere Textilmaterialien, die in Gegenwart der neuen Pfropfpolymerisate gefärbt werden können, sind z. B. solche aus Adipinsäure und Hexamethylendiamin (Polyamid 6,6), aus ε-Caprolactam (Polyamid 6), aus ω-Aminoundecansäure (Polyamid 11), aus ω-Aminoönanthsäure (Polyamid 7), aus ω-Aminopelargonsäure (Polyamid 8) oder aus Sebazinsäure und Hexamethylendiamin (Polyamid 6,10) zu erwähnen.

Synthetische oder natürliche Polyamidfasermaterialien werden in der Regel mit anionischen Farbstoffen gefärbt.

Bei den anionischen Farbstoffen handelt es sich beispielsweise um Salze schwermetallhaltiger oder vorzugsweise metallfreier Azomethin-, Mono-, Dis- oder Polyazofarbstoffe einschliesslich der Formazanfarbstoffe sowie der Anthrachinon-, Xanthen-, Nitro-, Triphenylmethan-, Naphthochinonimin- und Phthalocyaninfarbstoffe. Der ionische Charakter dieser Farbstoffe kann durch Metallkomplexbildung allein und/oder vorzugsweise durch saure, salzbildende Substituenten, wie Carbonsäuregruppen, Schwefelsäure- und Phosphonsäureestergruppen, Phosphonsäuregruppen oder vorzugsweise Sulfonsäuregruppen bedingt sein. Diese Farbstoffe können im Molekül auch sogenannte reaktive Gruppierungen, welche mit dem zu färbenden Material eine kovalente Bindung eingehen, aufweisen. Bevorzugt sind die sogenannten sauren metallfreien Farbstoffe. Letztere enthalten vorzugsweise nur eine einzige Sulfonsäuregruppe und gegebenenfalls eine weitere, jedoch keine salzbildende, wasserlöslichmachende Gruppe wie die Säureamid- oder Alkylsulfonylgruppe.

Von besonderem Interesse sind auch die 1 : 1- oder vorzugsweise 1 : 2-Metallkomplexfarbstoffe. Die 1 : 1-Metallkomplexfarbstoffe weisen vorzugsweise eine oder zwei Sulfonsäuregruppen auf. Als Metall enthalten sie ein Schwermetallatom, wie z. B. Kupfer, Nickel oder insbesondere Chrom.

Die 1 : 2-Metallkomplexfarbstoffe enthalten als Zentralatom ein Schwermetallatom, wie z. B. ein Kobaltatom oder insbesondere ein Chromatom. Mit dem Zentralatom sind zwei komplexbildende Komponenten verbunden, von denen mindestens eine ein Farbstoffmolekül ist, vorzugsweise jedoch beide Farbstoffmoleküle sind. Dabei können die beiden an der Komplexbildung beteiligten Farbstoffmoleküle gleich oder voneinander verschieden sein. Die 1 : 2-Metallkomplexfarbstoffe können z. B. zwei Azomethinmoleküle, einen Disazofarbstoff und einen Monoazofarbstoff oder vorzugsweise zwei Monoazofarbstoffmoleküle enthalten. Die Azofarbstoffmoleküle können wasserlöslichmachende Gruppen aufweisen, wie z. B. Säureamid-, Alkylsulfonyl- oder die obengenannten sauren Gruppen. Bevorzugt sind 1 : 2-Kobalt- oder 1 : 2-Chromkomplexe von Monoazofarbstoffen, die Säureamid-, Alkylsulfonyl- oder insgesamt eine einzige Sulfonsäuregruppe aufweisen.

Es können auch Mischungen der anionischen Farbstoffe eingesetzt werden.

Als Polyesterfasermaterial, das in Gegenwart des Pfropfpolymerisates gefärbt bzw. optisch aufgehellt werden kann, sind z. B. Celluloseesterfasern, wie Cellulose-2 1/2-acetatfasern und -triacetatfasern und besonders lineare Polyesterfasern zu erwähnen. Unter linearen Polyesterfasern sind dabei Synthesefasern zu verstehen, die z. B. durch Kondensation von Terephthalsäure mit Ethylenglykol oder von Isophthalsäure oder Terephthalsäure mit 1,4-Bis(hydroxymethyl)-cyclohexan erhalten werden, sowie Mischpolymere aus Terephthal- und Isophthalsäure und Ethylenglykol. Der in der Textilindustrie bisher fast ausschliesslich eingesetzte lineare Polyester besteht aus Terephthalsäure und Ethylenglykol.

Die für das Färben von Polyesterfasermaterialien zu verwendenden Dispersionsfarbstoffe, die in Wasser nur sehr wenig löslich sind und in der Farbflotte zum grössten Teil in Form einer feinen Dispersion vorliegen, können den verschiedensten Farbstoffklassen angehören, beispielsweise den Acridon-, Azo-, Anthrachinon-, Cumarin-, Methin-, Perinon-, Naphthochinonimin-, Chinophthalon-, Styryl- oder Nitrofarbstoffen. Es können auch Mischungen von Dispersionsfarbstoffen eingesetzt werden.

Polyacrylnitrilfasern werden zweckmässigerweise mit kationischen Farbstoffen gefärbt. Als kationische Farbstoffe können sowohl migrierende als auch nicht-migrierende Farbstoffe eingesetzt werden.

Als migrierende kationische Farbstoffe sind insbesondere solche mit einer mehr oder weniger delokalisierten positiven Ladung geeignet, deren Kationgewicht kleiner als 310, deren Parachor kleiner als 750 und deren log P kleiner als 3,2 ist. Der Parachor wird gemäss dem Artikel von O.R. Quayle [Chem. Rev. 53, 439 (1953)] berechnet und log P bedeutet die relative Lipophilie, deren Berechnung von C. Hanach et al. [J. Med. Chem. 16, 1207 (1973)] beschrieben wurde.

Nicht-migrierende kationische Farbstoffe sind insbesondere diejenigen, deren Kationgewicht grösser als 310 und deren Parachor grösser als 750 ist.

Die kationischen, migrierenden und nichtmigrierenden Farbstoffe können verschiedenen Farbstoffklassen angehören. Insbesondere handelt es sich um Salze, beispielsweise Chloride, Sulfate oder Metallhalogenide, beispielsweise Zinkchloriddoppelsalze von Azofarbstoffen, wie Monoazofarbstoffen oder Hydrazonfarbstoffen, Anthrachinon-, Diphenylmethan-, Triphenylmethan-, Methin-, Azomethin-, Cumarin-, Ketonimin-, Cyanin-, Xanthen-, Azin-, Oxazin- oder Thiazinfarbstoffen.

Es können auch Mischungen der kationischen Farbstoffe eingesetzt werden. Besonders bevorzugt sind Farbstoffkombinationen von mindestens 2 oder vorzugsweise 3 migrierenden oder nicht-migrierenden kationischen Farbstoffen zur Herstellung egaler Dichromie- oder Trichromiefärbungen, wobei auch Gemische aus migrierenden und nichtmigrierenden kationischen Farbstoffen verwendet werden können.

Die Fasermaterialien können auch als Mischgewebe unter sich oder mit anderen Fasern, z. B. Mischungen aus Polyacrylnitril/Polyester, Polyamid/Polyester, Polyester/Baumwolle, Polyester/Viskose, Polyacrylnitril/Wolle und Polyester/Wolle, verwendet werden.

Fasermischungen aus Polyester und Baumwolle werden in der Regel mit Kombinationen von Dispersionsfarbstoffen und Küpenfarbstoffen, Schwefelfarbstoffen, Leukoküpenesterfarbstoffen, Direktfarbstoffen oder Reaktivfarbstoffen gefärbt, wobei der Polyesteranteil mit Dispersionsfarbstoffen vor-, gleichzeitig oder nachgefärbt wird.

Polyester/Wolle-Mischfasermaterialien werden erfindungsgemäss vorzugsweise mit handelsüblichen Mischungen von anionischen Farbstoffen und Dispersionsfarbstoffen gefärbt.

Das zu färbende Textilmaterial kann sich in verschiedenen Aufmachungsformen befinden. Vorzugsweise kommt Stückware, wie Gewirke oder Gewebe, in Betracht.

Die neuen Polymerisate können auch beim Weisstönen ungefärbter synthetischer Fasermaterialien mit in Wasser dispergierten optischen Aufhellern eingesetzt werden. Die optischen Aufheller können beliebigen Aufhellerklassen angehören. Insbesondere handelt es sich um Cumarine, Triazolcumarine, Benzocumarine, Oxazine, Pyrazine, Pyrazoline, Diphenylpyrazoline, Stilbene, Styrylstilbene, Triazolylstilbene, Bis-benzoxazolylethylene, Stilben-bis-Benzoxazole, Phenylstilbenbenzoxazole, Thiophen-bis-Benzoxazole, Naphthalin-bis-Benzoxazole, Benzofurane, Benzimidazole und Naphthalimide.

Es können auch Mischungen von optischen Aufhellern erfindungsgemäss verwendet werden.

Die Menge der der Flotte zuzusetzenden Farbstoffe oder optischen Aufheller richtet sich nach der gewünschten Farbstärke ; im allgemeinen haben sich Mengen von 0,01 bis 10, vorzugsweise 0,2 bis 5 Gew.-%, bezogen auf das eingesetzte Textilmaterial, bewährt.

Die Färbebäder oder Aufhellflotten können je nach dem zu behandelnden Textilmaterial neben den Farbstoffen bzw. optischen Aufhellern und den erfindungsgemässen Pfropfpolymerisaten Wollschutzmittel, Oligomereninhibitoren, Oxidationsmittel, Antischaummittel, Emulgatoren, Egalisiermittel, Retarder und vorzugsweise Dispergiermittel enthalten.

Die Dispergiermittel dienen vor allem zur Erzielung einer guten Feinverteilung der Dispersionsfarbstoffe. Es kommen die beim Färben mit Dispersionsfarbstoffen allgemein gebräuchlichen Dispergatoren in Frage.

Als Dispergiermittel kommen vorzugsweise sulfatierte oder phosphatierte Anlagerungsprodukte von 15 bis 100 Mol Ethylenoxid oder vorzugsweise Propylenoxid an mehrwertige, 2 bis 6 Kohlenstoffatome aufweisende aliphatische Alkohole, wie z. B. Ethylenglykol, Glycerin oder Pentaerythrit oder an mindestens zwei Aminogruppen oder eine Aminogruppe und eine Hydroxylgruppe aufweisende Amine mit 2 bis 9 Kohlenstoffatomen sowie Alkylsulfonate mit 10 bis 20 Kohlenstoffatomen in der Alkylkette, Alkylbenzolsulfonate mit geradkettiger oder verzweigter Alkylkette mit 8 bis 20 Kohlenstoffatomen in der Alkylkette, wie z. B. Nonyl- oder Dodecylbenzolsulfonat, 1,3,5,7-Tetramethyloctylbenzolsulfonat oder Sulfobernsteinsäureester, wie Natriumdioctylsulfosuccinat, in Betracht.

Besonders günstig haben sich als anionische Dispergiermittel Ligninsulfonate, Polyphosphate und vorzugsweise Formaldehyd-Kondensationsprodukte aus aromatischen Sulfonsäuren, Formaldehyd und gegebenenfalls mono- oder bifunktionellen Phenolen, wie z. B. aus Kresol, β-Naphtholsulfonsäure und Formaldehyd, aus Benzolsulfonsäure, Formaldehyd und Naphthalinsäure, aus Naphthalinsulfonsäure und Formaldehyd oder aus Naphthalinsulfonsäure, Dihydroxydiphenylsulfon und Formaldehyd erwiesen. Bevorzugt ist das Dinatriumsalz des Di-(6-sulfonaphthyl-2-) methans.

Es können auch Gemische von anionischen Dispergiermitteln zum Einsatz kommen. Normalerweise liegen die anionischen Dispergiermittel in Form ihrer Alkalimetallsalze, Ammoniumsalze oder Aminosalze vor. Diese Dispergiermittel werden vorzugsweise in einer Menge von 0,1 bis 5 g/l Flotte verwendet.

Die Färbebäder oder Aufhellflotten können je nach dem zu verwendenden Farbstoff und Substrat zusätzlich zu den bereits genannten Hilfsmitteln auch übliche Zusätze, zweckmässig Elektrolyte wie Salze, z. B. Natriumsulfat, Ammoniumsulfat, Natrium- oder Ammoniumphosphate oder -polyphosphate, Metallchloride oder -nitrate wie Natriumchlorid, Calciumchlorid, Magnesiumchlorid bzw. Calciumnitrat, Ammoniumacetat oder Natriumacetat und/oder Säuren, z. B. Mineralsäuren wie Schwefelsäure oder Phosphorsäure, oder organische Säuren, zweckmässig niedere aliphatische Carbonsäuren wie Ameisen-, Essig- oder Oxalsäure sowie auch Alkalien oder Alkalispender, Komplexbildner, enthalten.

Die Säuren dienen vor allem der Einstellung des pH-Wertes der erfindungsgemäss verwendeten Flotten, der in der Regel 4 bis 6,5, vorzugsweise 4,5 bis 6, beträgt.

Bei Verwendung von Reaktivfarbstoffen enthalten die Zubereitungen in der Regel Fixieralkalien.

Als alkalisch reagierende Verbindungen zur Fixierung der Reaktivfarbstoffe werden beispielsweise Natriumcarbonat, Natriumbicarbonat, Natriumhydroxid, Dinatriumphosphat, Trinatriumphosphat, Borax,

wässeriges Ammoniak oder Alkalispender, wie z. B. Natriumtrichloracetat eingesetzt. Als Alkali hat sich insbesondere eine Mischung aus Wasserglas und einer 30 %-igen wässerigen Natriumhydroxidlösung sehr gut bewährt.

Der pH-Wert der Alkali enthaltenden Färbeflotten beträgt in der Regel 7,5 bis 12,5 vorzugsweise 8,5 bis 11,5.

Die Färbungen bzw. Aufhellungen erfolgen mit Vorteil aus wässeriger Flotte nach dem Ausziehverfahren. Das Flottenverhältnis kann dementsprechend innerhalb eines weiten Bereiches gewählt werden, z. B. 1 : 4 bis 1 : 100, vorzugsweise 1 : 6 bis 1 : 50. Die Temperatur, bei der gefärbt bzw. aufgehellt wird, beträgt mindestens 70 °C und in der Regel ist sie nicht höher als 140 °C. Vorzugsweise liegt sie im Bereich von 80 bis 135 °C.

Lineare Polyesterfasern und Cellulosetriacetatfasern färbt man vorzugsweise nach dem sogenannten Hochtemperaturverfahren in geschlossenen und zweckmässigerweise auch druckbeständigen Apparaturen bei Temperaturen von über 100 °C, bevorzugt zwischen 110 und 135 °C, und gegebenenfalls unter Druck. Als geschlossene Gefässe eignen sich beispielsweise Zirkulationsapparaturen wie Kreuzspul- oder Baumfärbeapparate, Haspelkufen, Düsen- oder Trommelfärbemaschinen, Muff-Färbeapparate, Paddeln oder Jigger.

Cellulose-2 1/2-acetatfasern färbt man vorzugsweise bei Temperaturen von 80-85 °C.

Wenn das zu färbende Material Cellulosefasermaterial oder synthetische Polyamidfasermaterial allein ist, erfolgt die Färbung zweckmässig bei einer Temperatur von 20 bis 106 °C, vorzugsweise von 30 bis 95 °C für Cellulosefasern und 80 bis 95 °C für Polyamidfasern.

Die Färbungen der Polyester-Baumwollefasermaterialien erfolgen vorzugsweise bei Temperaturen von über 106 °C zweckmässig bei 110 bis 135 °C. Diese Mischfasermaterialien können in Gegenwart von Carrier oder Carriergemischen gefärbt werden, welche als Färbebeschleuniger für das Färben des Polyesteranteils mit Dispersionsfarbstoffen wirken.

Das Färbeverfahren kann so durchgeführt werden, dass man das Färbegut entweder zuerst mit dem Pfropfpolymerisat kurz behandelt und anschliessend färbt oder vorzugsweise gleichzeitig mit dem Pfropfpolymerisat und dem Farbstoff behandelt.

Die Fertigstellung der Färbungen erfolgt durch Abkühlen der Färbeflotte auf 40 bis 70 °C, Spülen der Färbungen mit Wasser und gegebenenfalls durch Reinigung auf übliche Weise mit alkalischem Medium unter reduktiven Bedingungen. Die Färbungen werden dann wiederum gespült und getrocknet. Bei einer allfälligen Verwendung von Carriern werden die Färbungen zwecks Verbesserung der Lichtechtheit, vorteilhafterweise noch einer Hitzebehandlung, z. B. Thermoisolieren, unterworfen, die vorzugsweise bei 160 bis 180 °C und während 30 bis 90 Sekunden durchgeführt wird. Bei Verwendung von Küpenfarbstoffen für den Celluloseanteil wird die Ware auf übliche Weise zuerst mit Hydrosulfit bei einem pH-Wert von 6 bis 12,5 und dann mit Oxydationsmittel behandelt und schliesslich ausgewaschen.

Man erhält nach dem erfindungsgemässen Färbeverfahren gleichmässige und farbkräftige Ausfärbungen, die sich durch gute Farbausbeuten auszeichnen. Insbesondere werden egale Färbungen erzielt, wobei das Material ein sehr günstiges Monsantobild von 2 bis 4 (faltenfrei) aufweist, ein ruhiges Warenbild zeigt und einen angenehmen, weichen Griff besitzt.

Zudem werden die Echtheiten der Färbungen, wie z. B. Lichtechtheit, Reibechtheit und Nassechtheiten durch den Einsatz des Hilfsmittelgemisches nicht negativ beeinflusst. Ferner tritt beim Färben des Textilmaterials in Gegenwart des erfindungsgemäss verwendeten Pfropfpolymerisates kein störendes Schäumen auf.

In den folgenden Herstellungs- und Anwendungsbeispielen beziehen sich die Prozentsätze, wenn nichts anderes angegeben ist, auf das Gewicht. Die Mengen beziehen sich bei den Farbstoffen auf handelsübliche, d. h. coupierte Ware und bei den Komponenten des Hilfsmittelgemisches auf Reinsubstanz. Allfällige fünfstellige Colour-Index-Nummern (C.I.) beziehen sich auf die 3. Auflage des Coulour-Index.

## Herstellungsbeispiele

### Beispiel 1

12,5 g Polyethylenglykol-600-distearat und 40 g entionisiertes Wasser werden unter Stickstoffatmosphäre auf 90 °C gebracht. Hierauf lässt man im Verlauf von 30 Minuten gleichzeitig 37,5 g Acrylsäure und eine Lösung von 0,2 g Kaliumpersulfat in 20 g entionisiertem Wasser zutropfen. Man rührt 1 Stunde aus und lässt danach erneut eine Lösung von 0,1 g Kaliumpersulfat in 10 g entionisiertem Wasser zutropfen. Der Ansatz wird 3 Stunden bei 90 °C gehalten, auf Raumtemperatur abgekühlt und anschliessend durch Zugabe von 2 ml Natriumhydroxidlösung (30 %) und 80 ml entionisiertem Wasser auf einen Trockengehalt von 25 Gew.-% eingestellt. Diese Lösung hat, gemessen bei 25 °C eine Viskosität von 11 300 mPas. Die Oberflächenspannung bei 25 °C beträgt 43,7 dyn/cm, gemessen an einer 0,2 %igen Lösung.

### Beispiel 2

14,0 g Acrylamid, 6,0 g Polyethylenglykol-400-distearat, 80,0 g entionisiertes Wasser und 0,1 g

Kaliumpersulfat werden unter Stickstoffatmosphäre auf 80 °C erwärmt. Durch Zusatz von insgesamt 83 g entionisiertem Wasser während der Polymerisation wird die Reaktionsmasse rührbar gehalten. Nach 1 Stunde Polymerisationsdauer lässt man eine Lösung von 0,005 g Kaliumpersulfat in 20,0 g entionisiertem Wasser zutropfen und lässt das Reaktionsgemisch 3 Stunden lang auspolymerisieren. Man kühlt auf Raumtemperatur ab und setzt zur Stabilisierung der Reaktionsmasse 0,2 g Chloracetamid und 0,2 g Hydrochinonmonomethylether zu. Die Reaktionsmasse hat einen Trockengehalt an Pfropfpolymerisat von 10 Gew.-%. Diese Masse hat, gemessen bei 25 °C eine Viskosität von 4 800 mPas. Die Oberflächenspannung beträgt 38,4 dyn/cm, gemessen an einer 0,2 %igen Lösung.

Polyethylenglykol-400-distearat wird wie folgt hergestellt :

120 g Polyethylenglykol mit einem Molekulargewicht von 400, 227,2 g Stearinsäure und 0,5 ml konzentrierte Schwefelsäure ($d_4^{20}$ = 1,83 g/cm$^3$) werden unter Stickstoffatmosphäre auf 160 °C aufgeheizt. Hierauf destilliert man im Verlaufe von 2,5 Stunden 14 ml Wasser azeotrop ab. Die titrimetrisch bestimmte Säurezahl beträgt 2,0 (mg KOH/g). Nach Klärung über ein Tuchfilter erhält man 372 g Polyethylenglykol-400-distearat.

Beispiel 3

4,0 g Polyethylenglykol-400-distearat und 20 g entionisiertes Wasser werden unter Stickstoffatmosphäre auf 80 °C aufgeheizt. Hierauf lässt man getrennt während 40 Minuten gleichzeitig eine Lösung von 16,0 g Acrylamid in 50 ml entionisiertem Wasser und eine Lösung von 0,1 g Kaliumpersulfat in 20 ml entionisiertem Wasser zutropfen. Man hält das Reaktionsgemisch 3 Stunden bei 80 °C, kühlt auf Raumtemperatur ab und gibt anschliessend zur Stabilisierung 0,2 g Chloracetamid und 0,2 g Hydrochinonmonomethylether zu. Die Reaktionsmasse hat einen Trockengehalt von 18,5 Gew.-%. Diese Masse hat, gemessen bei 25 °C eine Viskosität von 21 000 mPas. Gemessen an einer 0,2 %-igen Lösung beträgt die Oberflächenspannung 38,2 dyn/an.

Beispiel 4

20 g Polyethylenglykol-1 540-distearat und 40 ml entionisiertes Wasser werden unter Stickstoffatmosphäre auf 90 °C aufgeheizt. Alsdann lässt man, gleichzeitig und getrennt, im Verlaufe von 1 Stunde, 30 g Acrylsäure und eine Lösung von 0,15 g Kaliumpersulfat in 20 ml entionisiertem Wasser zutropfen. Man lässt 1 Stunde polymerisieren und lässt erneut eine Lösung von 0,1 g Kaliumpersulfat in 10 ml entionisiertem Wasser zutropfen, wonach 2 weitere Stunden nachpolymerisiert wird. Anschliessend werden 80 ml entionisiertes Wasser und 5 ml 30 %-ige Natriumhydroxidlösung zugegeben, worauf das Reaktionsprodukt homogen gerührt wird. Der Reaktionsansatz hat einen Trockengehalt von 25 Gew.-%. Diese Lösung hat gemessen bei 25 °C eine Viskosität von 15 500 mPas. Gemessen an einer 0,2 %-igen Lösung beträgt die Oberflächenspannung 45,2 dyn/an.

Beispiel 5

32,5 g Polyethylenglykol-400-distearat, 10,0 g Acrylsäure, 0,2 g Dibenzoylperoxid und 40 ml entionisiertes Wasser werden unter Stickstoffatmosphäre auf 90 °C aufgeheizt. Nach Anspringen der Polymerisation lässt man im Verlauf von 40 Minuten 22,5 g Acrylsäure zutropfen, wobei hin und wieder durch Zusatz von insgesamt 150 ml entionisiertem Wasser in 10 ml-Mengen der Ansatz rührbar gehalten wird. Nach 2 Stunden Polymerisation lässt man 0,1 g Kaliumpersulfat in 10 ml entionisiertem Wasser zutropfen, worauf eine weitere Stunde nachpolymerisiert wird. Man rührt kalt und setzt 2 ml 30 %-ige Natriumhydroxidlösung zu. Der Ansatz hat einen Trockengehalt von 24,5 Gew.-%.

Anwendungsbeispiele

Beispiel 1

100 g eines texturierten Polyestergewirkes werden in 2,4 Liter Wasser auf einer Laborjetfärbemaschine mit folgenden Zusätzen gefärbt :

2 g eines Farbstoffes der Formel

(101) 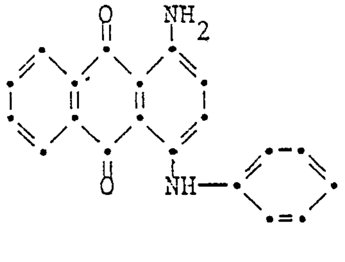

5 g Ammoniumsulfat,
1 g Ammoniumsalz des sauren Schwefelsäureesters eines durch Anlagerung von Propylenoxid an Glycerin erhaltenen Polyadduktes vom durchschnittlichem Molekulargewicht von 3 200,
3 g des gemäss Beispiel 2 hergestellten Pfropfpolymerisates
und 0,2 g Ameisensäure 85 %.

Diese Zusätze werden zuerst in Wasser gelöst bzw. dispergiert und dem Färbebad bei 70 °C zugegeben. Danach wird die Färbetemperatur innerhalb 60 Minuten auf 127 °C erhöht, worauf die Ware weitere 60 Minuten bei dieser Temperatur gefärbt wird. Alsdann kühlt man die Flotte im Verlaufe von 10 Minuten auf 60 °C ab, wonach die Färbung gespült und getrocknet wird. Man erhält eine egale blaue Färbung.

Das Monsantobild der erhaltenen gefärbten Ware ist 3. Ohne den Zusatz des Pfropfpolymerisates ist das Monsantobild nur 1.

Beispiel 2

100 kg eines Mischgewebes aus 55 Teilen Polyester und 45 Teilen Wolle werden auf einer Haspelkufe bei 50 °C mit einer Färbeflotte behandelt, die

1 kg eines Farbstoffgemisches (7 : 3) aus den Farbstoffen der Formel

(102) 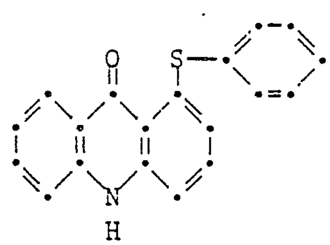 und

(103) 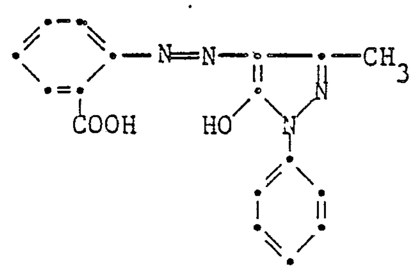 1 : 2 Cr-Komplex

0,8 kg Natriumsalz der Ethylendiamintetraessigsäure,
4 kg Naphthalinsulfonsäure/Formaldehyd-Umsetzungsprodukt,
2 kg eines amphoteren Fettaminpolyglykolethersulfates und
3 kg des gemäss Beispiel 3 hergestellten Pfropfpolymerisates

in 4 000 Liter Wasser enthält. Alsdann steigert man die Temperatur im Verlaufe von 30 Minuten auf 107 °C, worauf das Gewebe 1 Stunde bei dieser Temperatur gefärbt wird. Anschliessend kühlt man das Bad auf 40 °C ab und spült und trocknet das gefärbte Gewebe. Das Färbebad ist während der ganzen Dauer des Färbevorgangs schaumfrei.

Man erhält eine gleichmässige, echte, gelbe Färbung.

Das Monsantobild der erhaltenen gefärbten Ware ist 2-3.

Beispiel 3

Zu einer Hochtemperaturfärbemaschine, welche 100 kg eines Gewebes aus Polyester/Baumwolle (67 : 33) in 3 000 Liter Wasser bei 60 °C enthält, werden zuerst folgende Zusätze gegeben :

2 kg eines Gemisches aus den Farbstoffen der Formeln

(Siehe Formeln Seite 9 f.)

(104) 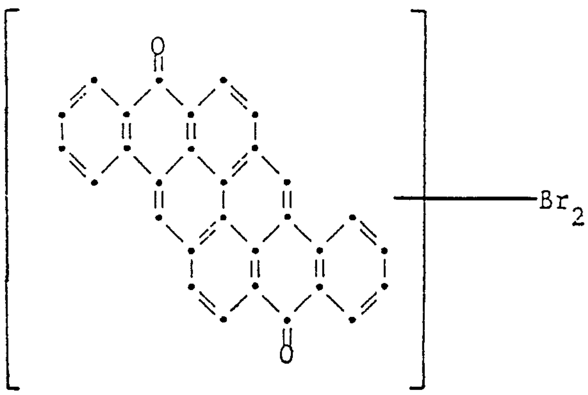 und

(105) 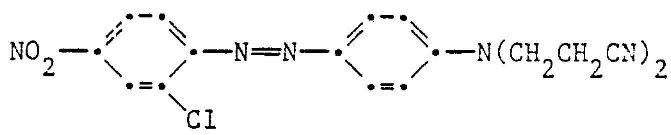

6 kg Ammoniumsulfat und
0,6 kg eines Fettalkylbenzimidazolsulfonates.

Dann erfolgt der Zusatz von 4 kg des gemäss Beispiel 1 hergestellten Pfropfpolymerisates. Hierauf stellt man den pH-Wert der Flotte mit 85 %-ige Ameisensäure auf 5 und lässt die Ware während 15 Minuten zirkulieren. Alsdann erhöht man die Temperatur im Verlaufe von 50 Minuten auf 135 °C und behandelt die Ware 90 Minuten bei dieser Temperatur. Die Flotte wird danach auf 70 °C abgekühlt, worauf folgende Zusätze zur Entwicklung des Küpenfarbstoffes hinzugefügt werden :

9 kg Natriumhydroxidlösung 30 %
9 kg Hydrosulfit 40 % und
5 kg Natriumchlorid.

Hiernach wird das Färbegut nochmals 45 Minuten bei 60 °C behandelt. Anschliessend wird es gespült, mit Wasserstoffsuperoxid oxidiert, wieder gespült und getrocknet. Das Färbebad ist während der ganzen Dauer des Färbevorgangs Schaumfrei.

Man erhält eine echte, gleichmässige, orange Färbung.

Das Monsantobild ist 3-4.

Beispiel 4

100 g eines Gewirkes aus texturiertem Polyamid 6,6 Fasermaterial werden auf einem Labor-Jet-Färbeapparat in 2,4 Liter Wasser mit folgenden Badezusätzen gefärbt :

1,6 g eines Farbstoffes der Formel

(106) 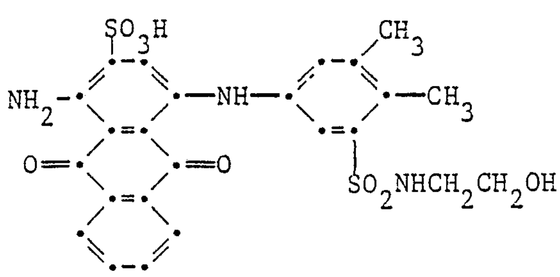

1 g eines Kondensationsproduktes aus 1 Mol Fettamin und 70 Mol Ethylenoxid,
0,5 g Essigsäure 80 %-ig,
1 g Ammoniumacetat und
3 g des gemäss Beispiel 4 hergestellten Pfropfpolymerisates.

Mit dem Färben wird bei 40 °C begonnen, die oben genannten Zusätze werden in der aufgeführten Reihenfolge mit Wasser verdünnt und dem Färbebad zugegeben. Die Temperatur des Färbebades wird

dann auf Kochtemperatur (96 °C) erhöht. Man färbt dann 40 Minuten bei dieser Temperatur. Anschliessend wird interhalb von 10 Minuten auf 50 °C abgekühlt, worauf das Gewirke entwässert und getrocknet wird. Während des Färbeprozesses tritt kein störendes Schäumen auf.

Man erhält eine egale Blaufärbung des Textilgutes.

Das Monsantobild entspricht der Note 3.

Beispiel 5

In einer Haspelkufe werden 100 kg Baumwolltrikot in 4 000 Liter Wasser bei 50 °C eingesetzt. Hierauf werden

3 kg eines Farbstoffes der Formel

(107) 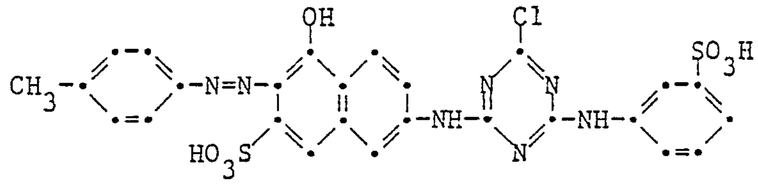

8 kg m-Nitrobenzolsulfonsäure (Natriumsalz) und

3 kg des gemäss Beispiel 4 hergestellten Pfropfpolymerisates zugesetzt. Nach der gleichmässigen Verteilung dieser Zusätze werden nach und nach

160 kg Natriumchlorid zugegeben und die Temperatur auf 80 °C erhöht. Darauf werden 12 kg Natriumhydroxidlösung 36 °Bé zugegeben.

Nach einer Laufzeit von weiteren 45 Minuten bei 80 °C Temperatur wird die Ware heiss und kalt gespült und dann mit

4 kg des Additionsproduktes von 9 Mol Ethylenoxid an 1 Mol Nonylphenol und

3 kg des gemäss Beispiel 4 hergestellten Pfropfpolymerisates in einem Flottenverhältnis von 1 : 40 20 Minuten bei Kochtemperatur nachgewaschen. Anschliessend wird die Ware nochmals gespült und getrocknet. Während des Färbeprozesses tritt kein störendes Schäumen auf.

Das Monsantobild entspricht der Note 4.

Beispiel 6

100 g Wollserge (180 g/m²) werden in 2,4 Liter Wasser auf einer Laborjetfärbemaschine mit folgenden Zusätzen gefärbt :

A 2 g 80 %ige Essigsäure
 5 g Natriumsulfat (wasserfrei)
 3 g des gemäss Beispiel 2 hergestellten Pfropfpolymerisates
B 0,5 g eines Farbstoffes der Formel

(108) 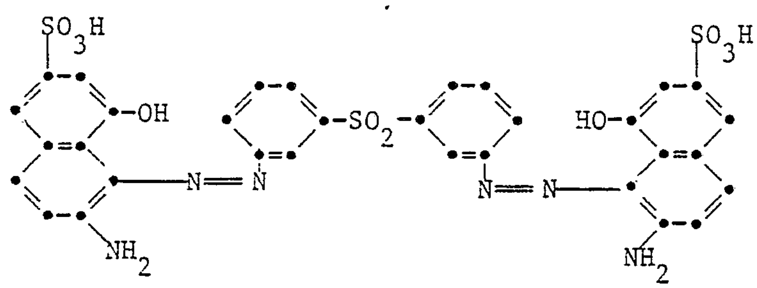

Die Zusätze A werden zuerst in Wasser gelöst bzw. dispergiert und dem Färbebad bei 50 °C zugegeben. Nach 5 Minuten wird der Farbstoff (Zusatz B) hinzugefügt, worauf die Temperatur innerhalb 30 Minuten auf 98 °C erhöht und die Ware 60 Minuten bei dieser Temperatur gefärbt wird. Alsdann kühlt man die Flotte auf 50 °C ab, wonach die Färbung gespült und getrocknet wird. Man erhält eine echte, gleichmässige rote Färbung mit sehr geringer Faltenbildung.

Beispiel 7

10 g eines Mischgewebes aus 55 Teilen Polyacrylnitril und 45 Teilen Wolle werden in einem Laborfärbeapparat (AHIBA) bei 50 °C mit einer Flotte behandelt, die

0,3 g Ammoniumsulfat
0,5 g Natriumsulfat
0,05 g eines amphoteren Fettaminpolyglykolethersulfates und
0,3 g des gemäss Beispiel 2 hergestellten Pfropfpolymerisates

in 400 ml Wasser enthält und mit Essigsäure auf pH 5 eingestellt worden ist.

Nach 5 Minuten werden
0,003 % des gelben Farbstoffes der Formel

(109) 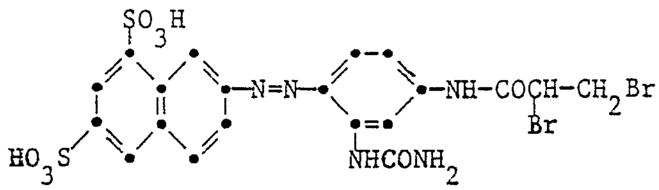

0,007 % des roten Farbstoffes der Formel

(110) 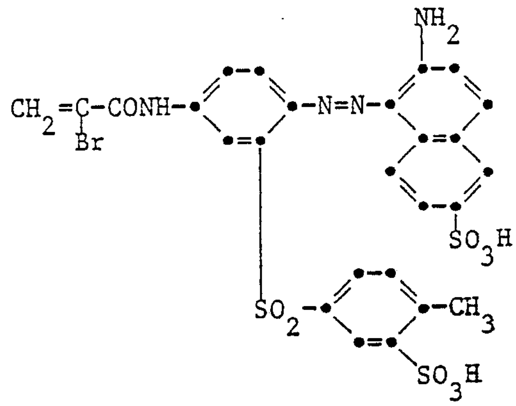

0,02 % des blauen Farbstoffes der Formel

(111) 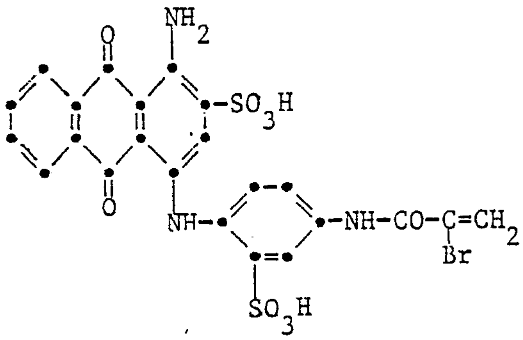

hinzugefügt. Alsdann steigert man die Temperatur im Verlaufe von 45 Minuten auf 98 °C, worauf das Gewebe 15 Minuten bei dieser Temperatur gehalten wird. Hierauf setzt man
0,02 % des Farbstoffes der Formel

(112) 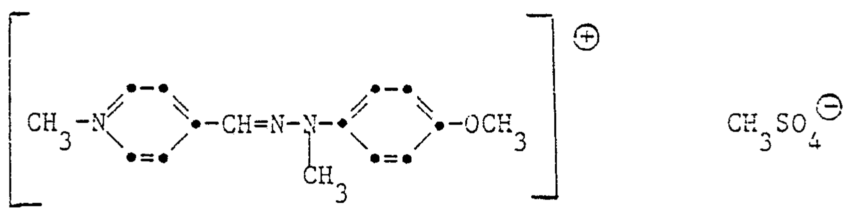

0,02 % des Farbstoffes der Formel

(113) 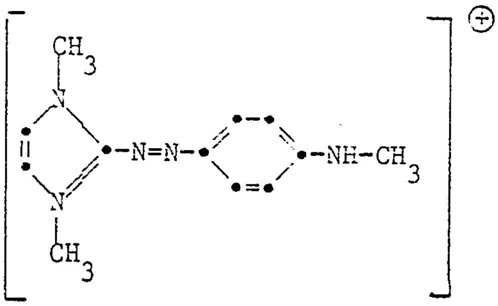 $CH_3SO_4^{\ominus}$

0,035 % des Farbstoffes der Formel

(114) 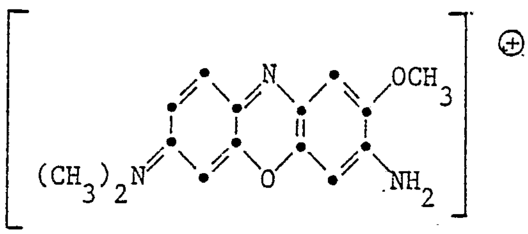 $Cl^{\ominus}$

um 0,3 % des quaternären Ammoniumsalzes der Formel

(115) $\left[\text{Kokosyl-N}(CH_3)_3\right]^{\oplus}$ $Cl^{\ominus}$

zu, stellt mit Essigsäure auf pH4 ein und färbt danach 45 Minuten bei 98 °C.

Anschliessend wird das Färbebad auf 60 °C abgekühlt und die Ware gespült und getrocknet. Man erhält eine echte und egale graue Färbung.

Beispiel 8

10 g gebleichtes und mercerisiertes Baumwolltrikot werden in einem Färbeapparat (AHIBA) bei 20 °C mit einer Flotte behandelt, die 0,03 g eines optischen Aufhellers der Formel

(116) 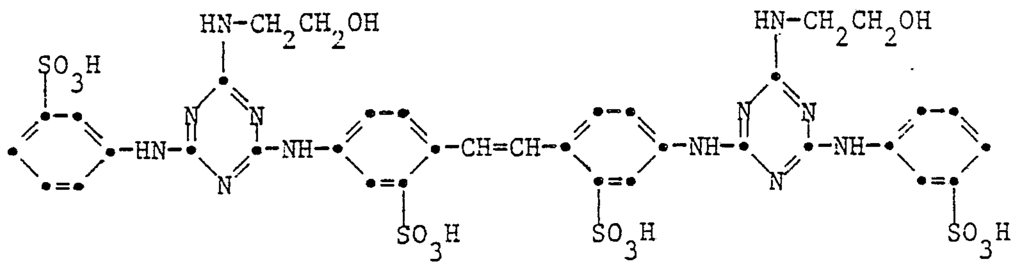

0,5 g Natriumsulfat
0,3 g des gemäss Beispiel 2 hergestellten Pfropfpolymerisates

in 400 ml Wasser enthält. Hierauf wird die Temperatur im Verlaufe von 30 Minuten auf 80 °C erhöht, worauf die Baumwolle 30 Minuten bei dieser Temperatur behandelt wird. Anschliessend wird das Bad auf 50 °C abgekühlt und die Ware gespült und getrocknet. Man erhält ein aufgehelltes Gewebe, das keine Falten zeigt.

Beispiel 9

100 kg Gewebe aus Polyester/Baumwolle (1 : 1) werden bei 80 °C während 20 Minuten auf einer Strangwaschmaschine bei einem Flottenverhältnis von 1 : 20 mit einer Flotte gewaschen, welche folgende Zusätze enthält :

2,5 g/l eines Gemisches aus Kokosfettsäurediethanolamid und 1-Benzyl-2-heptadecylbenzimidazoldisulfonsäure Natriumsalz (1 : 2)
2 g/l Natriumcarbonat und
2 g/l des gemäss Beispiel 1 hergestellten Pfropfpolymerisates.
Anschliessend wird das Gewebe kalt und warm gespült. Das Gewebe zeigt nach der Wäsche praktisch keine Faltenbildung.

Beispiel 10

Rohes Baumwolltrikot wird bei 90 °C während 15 Minuten bei einem Flottenverhältnis von 1 : 40 in einer wässerigen Flotte gebleicht, welche in Liter
2 g Natriumhydroxid 100 %,
5 ml einer 35 %igen wässerigen Wasserstoffsuperoxidlösung,
1 g des gemäss Beispiel 2 hergestellten Pfropfpolymerisates und
1 g eines wässerigen Netzmittels enthaltend
43 % Pentadekan-1-sulfonsäure-Natriumsalz,
14 % eines $C_9$-$C_{11}$-Fettalkoholpolyglykolethers und
5 % 2-Ethyl-1-hexanol, bezogen auf das gesamte Netzmittel enthält. Anschliessend wird das gebleichte Substrat je 1 Minute kochend, heiss und kalt gewaschen, neutralisiert und getrocknet. Man erhält gebleichtes Substrat mit ausgezeichnetem Weissgrad, welches zudem faltenfrei ist.

**Patentansprüche**

1. Wasserlösliche oder in Wasser dispergierbare Pfropfpolymerisate dadurch gekennzeichnet, dass sie als Pfropfgrundlage ein Polyalkylenglykol, dessen zwei endständige Hydroxylgruppen mit einer Fettsäure von 8 bis 26 Kohlenstoffatomen verestert sind, aufweisen und an einzelne Kohlenstoffatome der Polyalkylenglykoletherkette Seitenketten, die von aufgepfropften ethylenisch ungesättigten Monomeren entstammen, enthalten.

2. Pfropfpolymerisate gemäss Anspruch 1 dadurch gekennzeichnet, dass der aufgepfropfte Bestandteil hydrophile Gruppen aufweist.

3. Pfropfpolymerisate gemäss Anspruch 2 dadurch gekennzeichnet, dass die hydrophilen Gruppen saure, wasserlöslichmachende Gruppen sind.

4. Pfropfpolymerisate gemäss einem der Ansprüche 1 bis 3, dadurch gekennzeichnet, dass sie als aufgepfropftes Monomer Acrylsäure enthalten.

5. Pfropfpolymerisate gemäss einem der Ansprüche 1 und 2, dadurch gekennzeichnet, dass sie als aufgepfropftes Monomer Acrylamid enthalten.

6. Pfropfpolymerisate gemäss einem der Ansprüche 1 bis 5 dadurch gekennzeichnet, dass sie als Pfropfgrundlage einen Diester von Polyalkylenglykolen aus 3 bis 100 Mol Alkylenoxid, vorzugsweise Ethylenoxid aufweisen.

7. Pfropfpolymerisate gemäss einem der Ansprüche 1 bis 6 dadurch gekennzeichnet, dass das Polyalkylenglykol ein Molekulargewicht von 300 bis 1600, vorzugsweise 300 bis 1000 hat.

8. Pfropfpolymerisate gemäss einem der Ansprüche 1 bis 7 dadurch gekennzeichnet, dass das Polyalkylenglykol mit einer Fettsäure von 12 bis 22 Kohlenstoffatomen verestert ist.

9. Pfropfpolymerisate gemäss einem der Ansprüche 1 bis 8 dadurch gekennzeichnet, dass das Polyalkylenglykol mit einer festen Fettsäure, insbesondere Stearinsäure verestert ist.

10. Pfropfpolymerisate gemäss einem der Ansprüche 1 bis 9 dadurch gekennzeichnet, dass sie als Pfropfgrundlage ein Polyethylenglykol aus 3 bis 100 Mol Ethylenoxid und als Seitenketten aufgepfropfte Acrylsäure oder aufgepfropftes Acrylamid enthalten, wobei das Polyethylenglykol mit einer Fettsäure von 12 bis 22 Kohlenstoffatomen verestert ist.

11. Pfropfpolymerisate gemäss Anspruch 10 dadurch gekennzeichnet, dass sie als Pfropfgrundlage ein aus 4 bis 40 Mol Ethylenoxid erhaltenen Polyethylenglykol, das mit Palmitinsäure, Behensäure oder vorzugsweise mit Stearinsäure verestert ist, enthalten.

12. Pfropfpolymerisate gemäss Anspruch 11 dadurch gekennzeichnet, dass sie als Pfropfgrundlage ein mit Stearinsäure verestertes Polyethylenglykol aus 6 bis 15 Mol Ethylenoxid enthalten.

13. Pfropfpolymerisate gemäss einem der Ansprüche 1 bis 12, dadurch gekennzeichnet, dass sie in der Stammkette 15 bis 80 Gew.% des veresterten Polyalkylenglykols und in den Seitenketten 85 bis 20 Gew.% aufgepfropftes ethylenisch ungesättigtes Monomer enthalten.

14. Pfropfpolymerisate gemäss Anspruch 13, dadurch gekennzeichnet, dass sie in der Stammkette 20 bis 75 Gew.% verestertes Polyethylenglykol und in den Seitenketten 80 is 25 Gew.% aufgepfropfte Acrylsäure oder aufgepfropftes Acrylamid enthält.

15. Wässerige Lösungen oder Emulsionen, dadurch gekennzeichnet, dass sie ein Pfropfpolymerisat gemäss einem der Ansprüche 1 bis 14 enthalten.

16. Verfahren zur Herstellung von wasserlöslichen oder in Wasser dispergierbaren Pfropfpolymerisaten, dadurch gekennzeichnet, dass man

(1) ein Polyalkylenglykol, welches eine Polyalkylenglykoletherkette von 2 bis 200

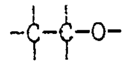

Gruppen aufweist und an beiden endständigen Hydroxylgruppen mit einer Fettsäure von 8 bis 26 Kohlenstoffatomen verestert ist, mit

(2) einem ethylenisch ungesättigten polymerisierbaren Monomer zusammenbringt und in Gegenwart von Katalysatoren polymerisiert.

17. Verfahren gemäss Anspruch 16, dadurch gekennzeichnet, dass man als Katalysatoren freie Radikale bildende organische oder anorganische Initiatoren, vorzugsweise Persulfat, verwendet.

18. Verwendung der Pfropfpolymerisate gemäss einem der Ansprüche 1 bis 15 als Faltenfreimittel beim Färben, optischen Aufhellen, Bleichen oder Waschen von Textilmaterialien.

19. Verfahren zum Färben bzw. optischen Aufhellen von Cellulosefasern, natürliche oder synthetische Polyamidfasern, Polyacrylnitrilfasern oder Polyesterfasern enthaltenden Textilmaterialien mit entsprechend geeigneten Farbstoffen bzw. optischen Aufhellern, dadurch gekennzeichnet, dass man die Textilmaterialien in Gegenwart eines Pfropfpolymerisates gemäss einem der Ansprüche 1 bis 14 färbt bzw. optisch aufhellt.

20. Verfahren gemäss Anspruch 19, dadurch gekennzeichnet, dass Cellulosefasern, synthetische Polyamidfasern oder Polyesterfasern enthaltende Textilmaterialien gefärbt bzw. optisch aufgehellt werden.

21. Verfahren gemäss Anspruch 20, dadurch gekennzeichnet, dass Polyesterfasern enthaltende Textilmaterialien mit Dispersionsfarbstoffen bei einer Temperatur von 70 bis 140 °C, vorzugsweise 110 bis 135 °C gefärbt werden.

**Claims**

1. A water-soluble or water-dispersible graft polymer which has as the graft base, a polyalkylene glycol in which two terminal hydroxyl groups have been esterified with a fatty acid of 8 to 26 carbon atoms, and contains side chains which come from grafted ethylenically unsaturated monomers at the individual carbon atoms of the polyalkylene glycol ether chain.

2. A graft polymer according to claim 1, wherein the grafted constituent contains hydrophilic groups.

3. A graft polymer according to claim 2, wherein the hydrophilic groups are acidic water-solubilising groups.

4. A graft polymer according to any one of claims 1 to 3, which contains acrylic acid as grafted monomer.

5. A graft polymer according to either of claims 1 and 2, which contains acrylamide as grafted monomer.

6. A graft polymer according to any one of claims 1 to 5, which has as the graft base a diester of polyalkylene glycols obtained from 3 to 100 mols of alkylene oxide, preferably ethylene oxide.

7. A graft polymer according to any one of claims 1 to 6, wherein the polyalkylene glycol has a molecular weight of from 300 to 1,600, preferably from 300 to 1,000.

8. A graft polymer according to any one of claims 1 to 7, wherein the polyalkylene glycol is esterified with a fatty acid of 12 to 22 carbon atoms.

9. A graft polymer according to any one of claims 1 to 8, wherein the polyalkylene glycol is esterified with a solid fatty acid, in particular stearic acid.

10. A graft polymer according to any one of claims 1 to 9, which contains as the graft base a polyethylene glycol obtained from 3 to 100 moles of ethylene oxide and contains grafted acrylic acid or grafted acrylamide as side chains, the polyethylene glycol being esterified with a fatty acid of 12 to 22 carbon atoms.

11. A graft polymer according to claim 10, which contains as the graft base a polyethylene glycol obtained from 4 to 40 moles of ethylene oxide, which polyethylene glycol is esterified with palmitic acid, behenic acid or preferably stearic acid.

12. A graft polymer according to claim 11, which contains as the graft base a polyethylene glycol obtained from 6 to 15 moles of ethylene oxide, which polyethylene glycol is esterified with stearic acid.

13. A graft polymer according to any one of claims 1 to 12, which contains 15 to 80 % by weight of esterified polyalkylene glycol in the main chain and 85 to 20 % by weight of grafted ethylenically unsaturated monomer in the side chains.

14. A graft polymer according to claim 13, which contains 20 to 75 % by weight of esterified polyethylene glycol in the main chain and 80 to 25 % by weight of grafted acrylic acid or grafted acrylamide in the side chains.

15. An aqueous solution or emulsion which contains a graft polymer according to any one of claims 1 to 14.

16. A process for the preparation of a water-soluble or water-dispersible graft polymer, which comprises combining

(1) a polyalkylene glycol which has a polyalkylene glycol ether chain of 2 to 200

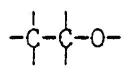

groups and is esterified at both terminal hydroxyl groups with a fatty acid of 8 to 26 carbon atoms, with

(2) an ethylenically unsaturated polymerisable monomer, and effecting polymerisation in the presence of a catalyst.

17. A process according to claim 16, wherein the catalyst used is an organic or inorganic free radical-forming initiator, preferably persulfate.

18. The use of a graft polymer according to any one of claims 1 to 15 as an anti-crease agent in dyeing, fluorescent whitening, bleaching or washing of textile materials.

19. Process for dyeing or fluorescent whitening of textile materials containing cellulose fibres, natural or synthetic polyamide fibres, polyacrylonitrile fibres or polyester fibres with correspondingly suitable dyes or fluorescent whitening agents, which process comprises dyeing or fluorescent whitening of the textile materials in the presence of a graft polymer according to any one of claims 1 to 14.

20. A process according to claim 19, which comprises dyeing or fluorescent whitening of textile materials containing cellulose fibres, synthetic polyamide fibres or polyester fibres.

21. A process according to claim 20, which comprises dyeing textile materials containing polyester fibres using disperse dyes at a temperature from 70 to 140 °C, preferably from 110 to 135 °C.

**Revendications**

1. Polymères greffés, solubles ou dispersibles dans l'eau, caractérisés en ce qu'ils comportent comme base de greffage un polyalkylèneglycol dont deux groupes hydroxyle terminaux sont estérifiés par un acide gras ayant de 8 à 26 atomes de carbone, et que, sur certains atomes de carbone de la chaîne polyalkylèneglycoléther, ils comportent des chaînes latérales qui proviennent de monomères greffés à insaturation éthylénique.

2. Polymères greffés selon la revendication 1, caractérisés en ce que le constituant greffé comporte des groupes hydrophiles.

3. Polymères greffés selon la revendication 2, caractérisés en ce que les groupes hydrophiles sont des groupes acides hydrosolubilisants.

4. Polymères greffés selon l'une des revendications 1 à 3, caractérisés en ce qu'ils comportent, comme monomère greffé, de l'acide acrylique.

5. Polymères greffés selon l'une des revendications 1 ou 2, caractérisés en ce qu'ils comportent, comme monomère greffé, de l'acrylamide.

6. Polymères greffés selon l'une des revendications 1 à 5, caractérisés en ce qu'ils comportent comme base de greffage un diester de polyalkylèneglycols obtenu à partir de 3 à 100 moles d'un oxyde d'alkylène, de préférence l'oxyde d'éthylène.

7. Polymères greffés selon l'une des revendications 1 à 6, caractérisés en ce que le polyalkylèneglycol a une masse moléculaire de 300 à 1 600, de préférence de 300 à 1 000.

8. Polymères greffés selon l'une des revendications 1 à 7, caractérisés en ce que le polyalkylèneglycol est estérifié par un acide gras ayant de 12 à 22 atomes de carbone.

9. Polymères greffés selon l'une des revendications 1 à 8, caractérisés en ce que le polyalkylèneglycol est estérifié par un acide gras solide, en particulier l'acide stéarique.

10. Polymères greffés selon l'une des revendications 1 à 11, caractérisés en ce qu'ils comportent, en tant que base de greffage, un polyéthylèneglycol obtenu à partir de 3 à 100 moles d'oxyde d'éthylène et, comme chaînes latérales, de l'acide acrylique greffé ou de l'acrylamide greffé, le polyéthylèneglycol étant estérifié par un acide gras ayant de 12 à 22 atomes de carbone.

11. Polymères greffés selon la revendication 10, caractérisés en ce qu'ils comportent comme base de greffage un polyéthylèneglycol obtenu à partir de 4 à 40 moles d'oxyde d'éthylène, et estérifié par de l'acide palmitique, de l'acide béhénique ou de préférence de l'acide stéarique.

12. Polymères greffés selon la revendication 11, caractérisés en ce qu'ils comportent comme base de greffage un polyéthylèneglycol obtenu à partir de 6 à 15 moles d'oxyde d'éthylène et estérifié par de l'acide stéarique.

13. Polymères greffés selon l'une des revendications 1 à 12, caractérisés en ce qu'ils comportent dans la chaîne de base 15 à 80 % en poids du polyalkylèneglycol estérifié et, dans les chaînes latérales, 85 à 20 % en poids d'un monomère greffé à insaturation éthylénique.

14. Polymères greffés selon la revendication 13, caractérisés en ce qu'ils comportent dans la chaîne de base 20 à 75 % en poids du polyéthylèneglycol estérifié et, dans les chaînes latérales, 80 à 25 % d'acide acrylique greffé ou d'acrylamide greffé.

15. Solutions ou émulsions aqueuses, caractérisées en ce qu'elles contiennent un polymère greffé selon l'une des revendications 1 à 14.

16. Procédé pour la préparation de polymères greffés, solubles dans l'eau ou dispersibles dans l'eau, caractérisé en ce que

(1) on réunit un polyalkylèneglycol comportant une chaîne polyalkylèneglycoléther de 2 à 200 groupes

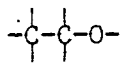

et estérifié en ses deux groupes hydroxyle terminaux par un acide gras ayant de 8 à 26 atomes de carbone, et

(2) un monomère polymérisable à insaturation éthylénique, et on procède à une polymérisation en présence de catalyseurs.

17. Procédé selon la revendication 16, caractérisé en ce qu'on utilise comme catalyseurs des amorceurs organiques ou inorganiques formant des radicaux libres, de préférence un persulfate.

18. Utilisation des polymères greffés selon l'une des revendications 1 à 15, comme agents supprimant les faux plis lors de la teinture, de l'azurage optique, du blanchiment ou du lavage des matières textiles.

19. Procédé pour la teinture ou l'azurage optique de matières textiles comportant des fibres cellulosiques, des fibres de polyamide naturelles ou synthétiques, des fibres de polyacrylonitrile ou des fibres de polyester, à l'aide de colorants ou azurants optiques appropriés correspondants, caractérisé en ce qu'on fait subir aux matières textiles une teinture ou un azurage optique en présence d'un polymère greffé selon l'une des revendications 1 à 14.

20. Procédé selon la revendication 19, caractérisé en ce qu'on fait subir une teinture ou un azurage optique à des matières textiles contenant des fibres cellulosiques, des fibres de polyamide synthétiques ou des fibres de polyester.

21. Procédé selon la revendication 20, caractérisé en ce qu'on teint, à l'aide de colorants de dispersion à une température de 70 à 140 °C, de préférence de 110 à 135 °C, des matières textiles contenant des fibres de polyester.